# EUROPÄISCHE PATENTANMELDUNG

(11) **EP 0 952 414 A2**
(43) Veröffentlichungstag der Anmeldung: **27.10.1999**
(21) Anmeldenummer: 99106649.9
(22) Anmeldetag: 31.03.1999
(51) Int. Cl.: F25D 27/00, F21V 8/00

(54) **Beleuchtungsanordung für Kühlvorrichtungen**

(30) Priorität: 20.04.1998 DE 19817570
(71) Anmelder: Zumtobel Staff GmbH, 6851 Dornbirn (AT)
(72) Erfinder: Vamberszky, Klaus, Dipl.-Ing., 6900 Bregenz (AT); Safarik, Dieter, Ing., 6890 Lustenau (AT); Junghans, Bert, Dipl.-Ing., 6850 Dornbirn (AT)
(74) Vertreter: Schmidt-Evers, Jürgen, Dipl.-Ing.

(57) **Zusammenfassung**

Die Erfindung betrifft eine Beleuchtungsanordnung für Kühlvorrichtungen (1), insbesondere für Tiefkühltruhen und -schränke und wenigstens einer Lichtquelle (8) zur Beleuchtung des Kühlraumes (3, 5). Um eine bessere und gleichmäßigere Beleuchtung des Kühlgutes in den Kühlräumen (3, 5) zu erreichen, wird das Licht von der Lichtquelle (8) über einen an diese angekoppelten Lichtleiter (9) zu dem zu beleuchtenden Kühlgut geführt. Die Lichtquelle (8) wird dabei bevorzugt außerhalb des Kühlraumes (3, 5) positioniert. Der Lichtleiter (9) umfaßt vorzugsweise eine lichtdurchlässige Kunststofffolie (15) mit einer außenliegenden Prismenstruktur (19) auf, die für kleine Einfallswinkel als Reflektor wirkt, für größere Einfallswinkel jedoch transparent ist, einen an der Innenseite der Kunststofffolie (15) angeordneten, sogenannten Extraktor (16), ein an der Außenseite der Kunststoffolie (15) angeordnetes lichtdurchlässiges Schutzrohr (17) zum mechanischen Schutz der lichttechnischen Komponenten und einen an der Außenseite des Schutzrohres (17) angeordneten Reflektor (18) mit einem bestimmten Öffnungswinkel (α).

## Beschreibung

Die Erfindung betrifft eine Beleuchtungsanordnung für Kühlvorrichtungen, wie Tiefkühltruhen oder -schränke, nach dem Oberbegriff von Anspruch 1.

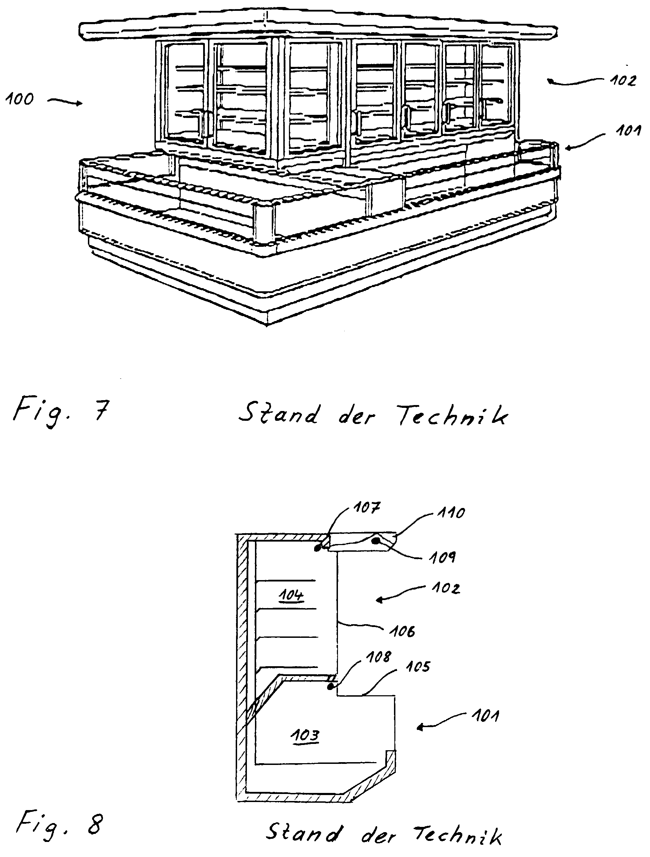

Kühlvorrichtungen der eingangs genannten Art sind in verschiedensten Ausführungen bekannt und dienen beispielsweise der Präsentation von tiefgekühlten Waren in Lebensmittelgeschäften bzw. -abteilungen. Ein Beispiel einer solchen bekannten Kühlvorrichtung ist in den Fig. 7 und 8 dargestellt.

Fig. 7 zeigt in perspektivischer Darstellung eine kombinierte Tiefkühlvorrichtung 100 mit einem unteren Truhenteil 101, beispielsweise für das breite Warensortiment, und einem oberen Schrankteil 102, beispielsweise für höherwertige Produkte. Die Kühlräume 103, 104 des Truhenteils 101 und des Schrankteils 102 weisen jeweils Zugangsöffnungen 105 bzw. 106 auf, die mit lichtdurchlässigen Deckeln bzw. Türen aus Glas verschließbar sind. Die in Fig. 7 gezeigte Tiefkühlvorrichtung 100 eignet sich insbesondere zur Rundum-Warenpräsentation im Mittelraum von Lebensmittelabteilungen.

Zur Beleuchtung der Kühlräume 103, 104 werden in herkömmlichen Tiefkühlvorrichtungen 100 im allgemeinen einfache Leuchten 107-109, wie Leuchtstofflampen, eingesetzt, die häufig auch als Lichtbalken bezeichnet werden. Ein Beispiel einer üblichen Anordnung der Leuchtstofflampen 107-109 ist in der Schnittdarstellung von Fig. 8 gezeigt. Im vertikalen oberen Betriebsteil 102 und im horizontalen unteren Betriebsteil 101 sind die Leuchtstofflampen 107 und 108 im Inneren der Kühlräume 103, 104 gelagert. Zusätzlich werden aufgrund der relativ geringen Lichtleistung der Leuchtstofflampen im Inneren der Kühlräume 103, 104 an Vorbauten 110 oberhalb der Schränke 102 weitere Leuchtstofflampen 109 angeordnet, die Licht nach unten abstrahlen und zur zusätzlichen Beleuchtung des Schrankinneren 104 dienen sollen.

Als nachteilig bei dieser herkömmlichen Beleuchtungsanordnung wird angesehen, daß aufgrund der in den Kühlräumen 103, 104 herrschenden niedrigen Umgebungstemperatur die Leuchtleistung der Leuchtstofflampen 107, 108 im Inneren der Kühlräume 103, 104 auf bis zu 20% des Nennlichtstromes absinkt, da Leuchtstofflampen extrem temperaturempfindlich sind. Außerdem erzeugen die Leuchtstofflampen 107, 108 im Inneren der Kühlräume 103, 104 eine direkte Wärmeentwicklung im Bereich des Kühlgutes und erhöhen somit die Kühllast der Tiefkühlvorrichtung 100. Die zusätzlichen, außerhalb der Kühlräume 103, 104 angebrachten Leuchtstofflampen 109 erzielen nur eine relativ geringe Leuchtkraft im Inneren des Schrankteils 102, erzeugen andererseits jedoch unerwünschte Reflexionen an den Glasscheiben der Deckel und Türen der Kühlräume.

Ausgehend von dem genannten Stand der Technik ist es eine Aufgabe der Erfindung, eine Beleuchtungsanordnung für Kühlvorrichtungen der eingangs genannten Art mit einer besseren und gleichmäßigeren Beleuchtung des Kühlgutes zu schaffen, die die oben beim Stand der Technik genannten Nachteile vermeidet.

Diese Aufgabe wird durch die Merkmale des Anspruches 1 gelöst. Die Verwendung eines mit der Lichtquelle gekoppelten Lichtleiters anstelle der herkömmlich eingesetzten Leuchtstofflampen ermöglicht auf einfache Weise eine bessere und gleichmäßigere Beleuchtung des Kühlgutes in den Kühlräumen einer Kühlvorrichtung. Durch den zweiteiligen Aufbau des Beleuchtungsmittels aus von Lichtquelle und Lichtleiter ist es auf einfache Weise vorteilhaft möglich, die Lichtquelle außerhalb des Kühlraumes anzuordnen. Ebenso dürfte es für den Fachmann kein Problem darstellen, eine geeignete Position für die Lichtquelle im Inneren des Kühlraumes auszuwählen, an dem eine direkte Wärmeeinstrahlung durch die Lichtquelle auf das Kühlgut verhindert oder abgeschirmt werden kann. Der Lichtleiter als solcher stellt keine Wärmequelle dar. Ferner ist die Leuchtleistung des Lichtleiters prinzipiell unabhängig von der Umgebungstemperatur und es kann somit problemlos eine relativ große Leuchtkraft im Kühlraum und eine gute Beleuchtung des Kühlgutes erzielt werden.

Der Lichtleiter weist in einer bevorzugten Ausführungsform der Erfindung als Hauptbestandteil eine lichtdurchlässige Kunststofffolie mit einer außenliegenden, äußerst präzisen Prismenstruktur auf, die in einem großen Winkelbereich kleiner Einfallswinkel den von der Glasfaser her bekannten Effekt der Totalreflexion nutzt, für größere Einfallswinkel jedoch transparent ist. Um eine seitliche Auskopplung des Lichtes zu erzielen, ist im Inneren der lichtdurchlässigen Kunststofffolie ein Mittel zur diffusen Streuung des Lichtes, ein sogenannter Extraktor, vorgesehen, der das Licht zu größeren Einfallswinkeln hin auf die Kunststofffolie streut, für die die Folie transparent ist. Die Breite dieses Extraktors nimmt vorteilhafterweise mit der Länge des Lichtleiters zu, da gegen Ende des Lichtleiters die Lichtmenge um den ausgekoppelten Anteil verringert ist. Für eine gleichmäßige Beleuchtung muß also am Ende des Lichtleiters prozentual mehr Licht ausgekoppelt werden als am Anfang des Lichtleiters.

In einer bevorzugten Weiterbildung der Erfindung wird als Lichtquelle eine Halogen-Metalldampflampe verwendet, die Licht mit einer Farbtemperatur größer als 4000 K erzeugt. Dieses kalte Licht wird vom Kunden mit Kälte assoziiert und unterstützt damit die Warenpräsentation in den Tiefkühlvorrichtungen.

Ferner ist zwischen Lichtquelle und Lichtleiter vorteilhafterweise ein UV-Filter, ein IR-Filter oder ein kombinierter UV/IR-Filter angeordnet, der den UV- und/oder den IR-Anteil des Lichtes minimiert, was zu einer Verringerung der Kristallbildung am Kühlgut führt.

Weitere Ausgestaltungen und Weiterbildungen der vorliegenden Erfindung sind Gegenstand weiterer Unteransprüche.

Die Erfindung wird im folgenden anhand eines bevorzugten Ausführungsbeispieles unter Bezugnahme auf die beiliegende Zeichnung näher erläutert. Darin zeigen:
- Fig. 1: ausschnittweise eine Beleuchtungsanordnung einer Kühlvorrichtung mit mehreren Beleuchtungsmitteln gemäß der vorliegenden Erfindung;
- Fig. 2: ein Beleuchtungsmittel gemäß der vorliegenden Erfindung in vergrößerter Darstellung im Längsschnitt;
- Fig. 3: ein Lichtleiter des Beleuchtungsmittels von Fig. 2 in vergrößerter Darstellung im Schnitt;
- Fig. 4: eine lichtdurchlässige Kunststofffolie des Lichtrohres von Fig. 3 in perspektivischer Darstellung;
- Fig. 5: einen vergrößerten Ausschnitt der lichtdurchlässigen Kunststofffolie von Fig. 4;
- Fig. 6A: ein Beleuchtungsmittel gemäß der vorliegenden Erfindung gemäß Ansicht A von Fig. 6B;
- Fig. 6B: ein Beleuchtungsmittel gemäß der vorliegenden Erfindung gemäß Ansicht B von Fig. 6A;
- Fig. 7: eine herkömmliche Kühlvorrichtung in perspektivischer Darstellung; und
- Fig. 8: eine herkömmliche Kühlvorrichtung im Schnitt.

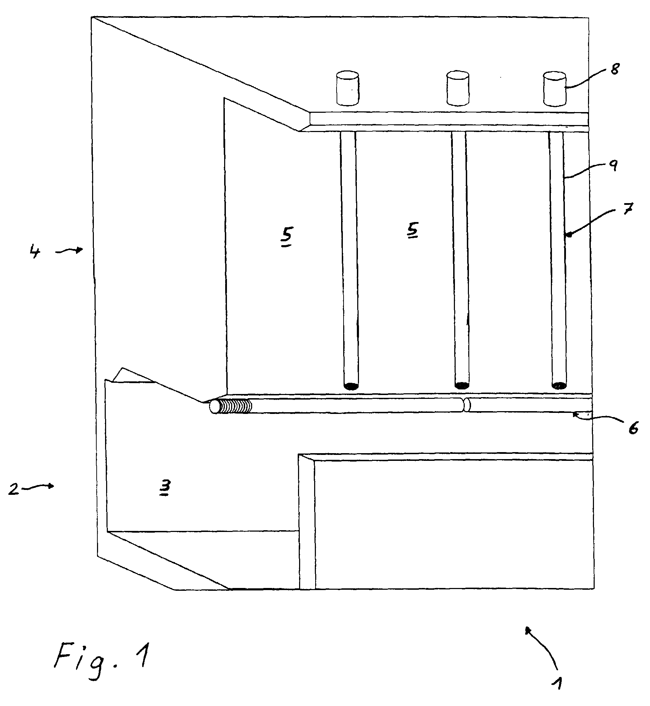

In Fig. 1 ist schematisch ein Ausschnitt einer Kühlvorrichtung 1 mit einer erfindungsgemäßen Beleuchtungsanordnung dargestellt. Die Kühlvorrichtung 1 von Fig. 1 besteht ähnlich wie die herkömmliche Tiefkühlvorrichtung 100 von Fig. 7 aus einem unteren, horizontalen Truhenteil 2 mit einem ersten Kühlraum 3 und einem oberen, vertikalen Schrankteil 4 mit mehreren Kühlräumen 5. Die Zugangsöffnungen zu den Kühlräumen 3, 5 sind mit lichtdurchlässigen Deckeln bzw. Türen (nicht gezeigt) verschließbar, durch die der Kunde von außen die tiefgekühlten Waren im Inneren der Kühlräume sehen kann. Anstelle der in Fig. 1 dargestellten kombinierten Tiefkühlvorrichtung 1 ist die Erfindung selbstverständlich auch bei einfachen Tiefkühlvorrichtungen, d.h. separaten Tiefkühltruhen und separaten Tiefkühlschränken, anwendbar. Ferner ist es auch denkbar, die vorliegende Erfindung in großen Kühlräumen bzw. -hallen zu deren Beleuchtung einzusetzen.

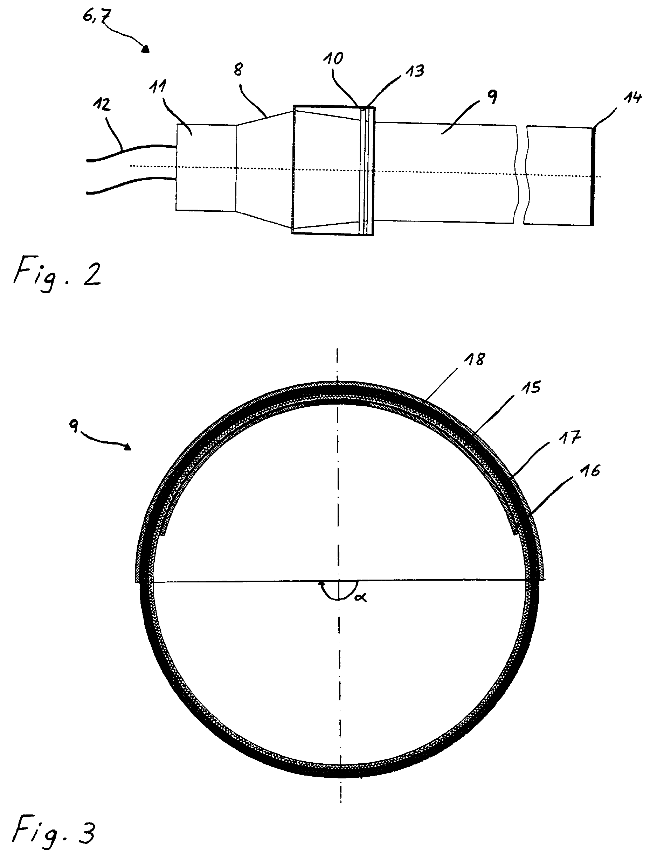

Die Kühlräume 3, 5 der kombinierten Tiefkühlvorrichtung 1 werden durch Beleuchtungsmittel 6 und 7 beleuchtet. Im vertikalen Betriebsteil 4 der Tiefkühlvorrichtung 1 sind diese Beleuchtungsmittel 7 vertikal angeordnet, wobei in jedem Kühlraum 5 des Schrankteils 4 zumindest ein Beleuchtungsmittel 7 im vorderen Bereich der Zugangsöffnung vorgesehen ist. Im unteren Truhenteil 2 sind je nach Breite des Truhenteils 2 mehrere Beleuchtungsmittel 6 horizontal im oberen Bereich des Kühlraumes 3 hintereinander angeordnet. Als Beleuchtungsmittel 6 und 7 für den Truhenteil 2 bzw. den Schrankteil 4 werden im wesentlichen die gleichen Beleuchtungsmittel verwendet, deren Aufbau nachfolgend anhand der Fig. 2 bis 6 näher erklärt wird.

Fig. 2 zeigt in vergrößerter Darstellung ein Beleuchtungsmittel 6, 7 gemäß der vorliegenden Erfindung im Längsschnitt. Die Hauptbestandteile des im wesentlichen rohrförmigen Beleuchtungsmittels 6, 7 sind eine Lichtquelle 8, ein Lichtleiter 9 und eine Einkoppelvorrichtung 10, mittels der das von der Lichtquelle 8 erzeugte Licht in den Lichtleiter 9 eingekoppelt wird. Die Lichtquelle 8 ist auf einem Sockel 11 befestigt und mit einem Versorgungskabel 12 zur Stromversorgung der Lichtquelle 8 verbunden. Als Lichtquellen 8 werden bevorzugt Halogen-Metalldampflampen 21 eingesetzt, die in einem Reflektorgehäuse 22 eingebaut sind, so daß das von der Lampe 21 erzeugte Licht in Richtung auf die Einkoppelvorrichtung 10 gebündelt wird. Die verwendeten Lampen senden vorteilhafterweise kaltes Licht aus, d.h. Licht mit einer hohen Farbtemperatur von größer als etwa 4000 K. Mit einem solchen kalten Licht wird Kälte assoziiert und somit die Präsentation der tiefgekühlten Waren in den Tiefkühlvorrichtungen 1 unterstützt.

Die Einkoppelvorrichtung 10 weist neben einem allgemein bekannten optischen Linsensystem zur Bündelung des Lichtstrahles auch einen kombinierten UV/IR-Filter 13 auf. Dieser Filter minimiert den UV- und den IR-Anteil des von der Lichtquelle 8 erzeugten Lichtes und soll dadurch die bei herkömmlichen Beleuchtungsanordnungen in Kühlvorrichtungen auftretende Kristallbildung am Kühlgut verhindern oder zumindest verringern. Bei herkömmlichen Beleuchtungsmitteln wird bei Bestrahlung des Kühlgutes durch die Energie der Lichteinstrahlung ein Kondensatfilm auf dem Kühlgut erzeugt, der aufgrund der niedrigen Umgebungstemperatur im Inneren des Kühlraumes gefriert. Die erfindungsgemäßen Beleuchtungsmittel 6, 7 schränken die Strahlungseinwirkung auf den zwingend erforderlichen sichtbaren Bereich ein, der immer noch eine ausreichende Beleuchtung der Waren im Kühlraum 3, 5 gewährleistet.

Der Lichtleiter 9 nutzt den Effekt der Totalreflexion ähnlich wie ein Glasfaserkabel und ermöglicht auf diese Weise die Übertragung des von der Lichtquelle 8 erzeugten und über die Einkoppelvorrichtung 10 in den Lichtleiter eingekoppelten Lichtes. Am der Lichtquelle 8 bzw. der Einkoppelvorrichtung 10 entgegengesetzten Ende weist der Lichtleiter 9 einen planen Reflektor 14 auf. Im Gegensatz zum bekannten Glasfaserkabel ermöglicht der Lichtleiter 9 - wie weiter unten näher beschrieben - jedoch nicht nur die Übertragung von Licht, sondern auch eine seitliche Auskopplung des Lichts.

Ein Ausführungsbeispiel eines für die erfindungsgemäße Beleuchtungsanordnung von Tiefkühlvorrichtungen geeigneten Lichtleiters 9 wird im folgenden anhand der Fig. 3 bis 6 genauer beschrieben.

In Fig. 3 ist zunächst der Lichtleiter 9 im Querschnitt gezeigt. Der Lichtleiter 9 hat einen kreisförmigen Querschnitt mit einem Durchmesser von beispielsweise etwa 55 mm, während der Durchmesser der Einkoppelvorrichtung 10 etwa 65 mm beträgt. Prinzipiell sind auch andere Querschnittsgeometrien, wie quadratisch oder rechteckförmig, für den Lichtleiter 9 denkbar, die kreisrunde Form ist jedoch insbesondere aus herstellungstechnischen Gründen zu bevorzugen. Der Lichtleiter 9 umfaßt vier Elemente: eine kreisförmig gebogene, lichtdurchlässige Kunststofffolie 15 mit einer außenliegenden, äußerst präzisen Prismenstruktur 19, einen an der Innenseite der Kunststofffolie 15 und konzentrisch zu dieser angeordneten, sogenannten Extraktor 16 mit einer bestimmten, über die Länge des Lichtleiters 9 variierenden Breite, ein an der Außenseite der Kunststoffolie 15 und konzentrisch zu dieser angeordnetes lichtdurchlässiges Schutzrohr 17 zum mechanischen Schutz der lichttechnischen Komponenten um den gesamten Umfang der Kunststofffolie 15 herum, und einen an der Außenseite des Schutzrohres 17 und konzentrisch zu diesem angeordneten Reflektor 18 mit einem bestimmten Öffnungswinkel α.

Der Öffnungswinkel α des Reflektors 18 bestimmt das Lichtaustrittsfenster des Lichtleiters 9 und somit die Beleuchtung durch das Beleuchtungsmittel 6, 7. Es hat sich gezeigt, daß bei den vertikal angeordneten Beleuchtungsmitteln 7 im Schrankteil 4 der Tiefkühlvorrichtung 1 ein Öffnungswinkel α von etwa 180° und bei den horizontal angeordneten Beleuchtungsmitteln 6 im Truhenteil 2 der Tiefkühlvorrichtung 1 ein Öffnungswinkel α von etwa 140° für eine ausreichende und gleichmäßige Beleuchtung der Kühlräume 3 bzw. 5 vorteilhaft ist.

Als geeignete lichtdurchlässige Kunststofffolie 15 ist beispielsweise der Scotch™ Optical Lighting Film (kurz SOLF) der Firma 3M bekannt. Die SOLF-Folie 15 ist ein flexibler Prismenfilm, der den von der Glasfaser her bekannten Effekt der Totalreflexion ausnutzt und beispielsweise in Rohrform gebracht als Lichtleiter zur Übertragung von Licht eingesetzt werden kann. Im Gegensatz zur bekannten Glasfaser kann bei dem so geformten Lichtleiter das von einer Lichtquelle 8 erzeugte und mittels einer Einkoppelvorrichtung 10 eingekoppelte Licht auch seitlich aus dem Lichtleiter 9 ausgekoppelt werden. Auf diese Weise läßt sich beispielsweise ein Punktstrahler in einen Linearstrahler umwandeln, was auch bei der Beleuchtungsanordnung für Kühlvorrichtungen 1 gemäß der vorliegenden Erfindung ausgenutzt wird.

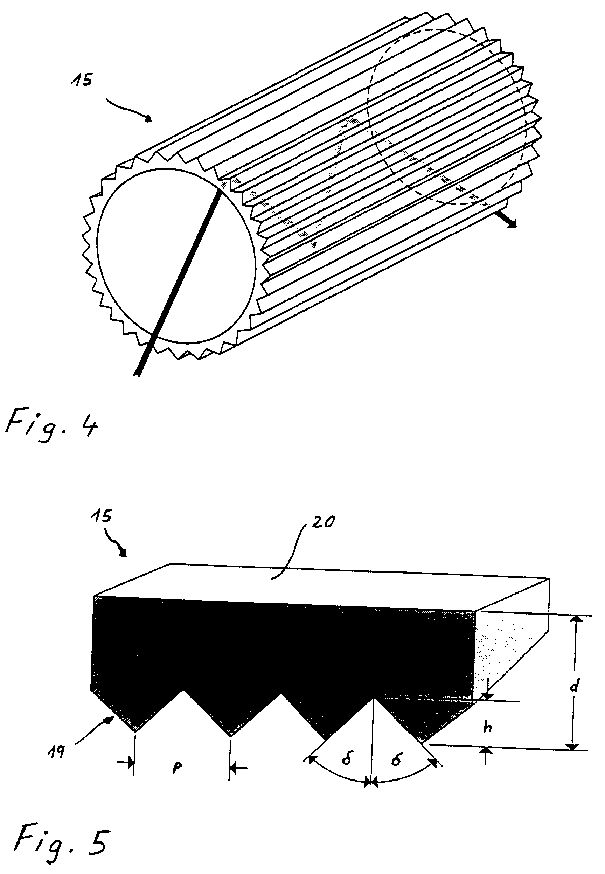

Bei der Folie 15, die vergrößert in den Fig. 4 und 5 dargestellt ist, handelt es sich um eine lichtdurchlässige Kunststofffolie mit einer äußerst präzisen Prismenstruktur 19 auf der einen und einer sehr glatten Oberfläche 20 auf der anderen Seite. Die Oberflächenrauhigkeiten sollten kleiner als die Wellenlänge des sichtbaren Lichts sein. Die Kunststofffolie 15 nutzt den Effekt der Totalreflexion. An der prismatischen Oberfläche 19 wird von der glatten Oberfläche 20 her einfallendes Licht bei kleinen Einfallswinkeln zweimal durch Totalreflexion umgelenkt und wieder zur Einfallsrichtung zurückgebrochen. Die Folie 15 wirkt so in einem großen Winkelbereich kleiner Einfallswinkel als Reflektor. Im Totalreflexionsbereich kann ein Reflexionsgrad von bis zu 98% erreicht werden, der größer als bei den meisten anderen bekannten Materialien ist. Anders als ein Reflektor ist die Folie 15 jedoch für größere Einfallswinkel transparent; das durchtretende Licht wird dann, wie bei einer Linse, in seiner Richtung geändert.

Typische Maße der lichtdurchlässigen Kunststofffolie 15 sind in Fig. 5 eingezeichnet. Die Dicke d der Folie 15 beträgt etwa 0,5 - 0,6 mm; und die Prismenstruktur 19 weist einen Prismenabstand p von etwa 0,35 mm, eine Prismenhöhe h von etwa 0,17 mm und einen Öffnungswinkel δ der Prismen von etwa 45° auf.

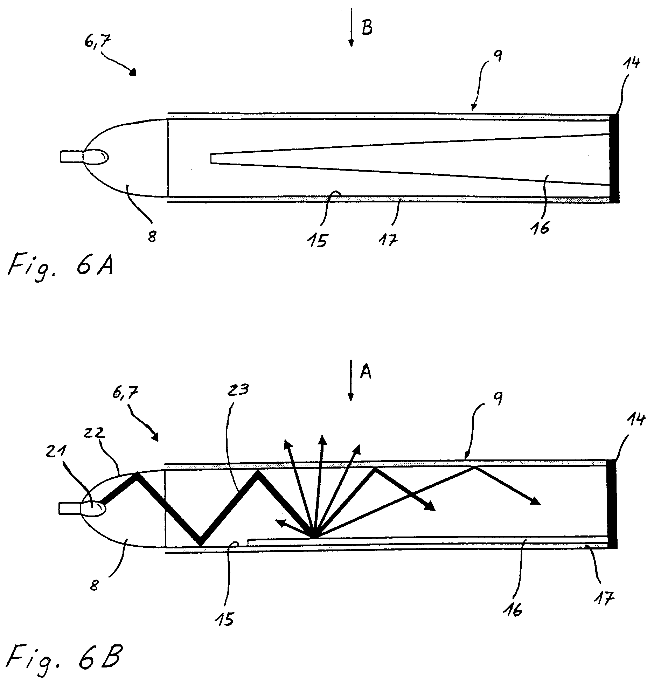

Anhand der Fig. 6A und 6B, die ein Ausführungsbeispiel eines Beleuchtungsmittels 6, 7 in verschiedenen, um 90° zueinander gedrehten Ansichten zeigen, soll nun die Funktionsweise des Lichtleiters 9 genauer erklärt werden. Im Langsschnitt des Beleuchtungsmittels 6, 7 ist die Lichtquelle 8 und der Lichtleiter 9 mit Kunststofffolie 15, Schutzrohr 17 und Extraktor 16 zu erkennen. Der Einfachheit halber wurde in den Fig. 6A und 6B auf die Darstellung der Einkoppelvorrichtung 10 und den Reflektor 18 verzichtet.

Die Lichtquelle 8 besteht im wesentlichen aus einer Lampe 21 mit Reflektor 22 zur Bündelung des Lichtstrahles 23. Das der Lichtquelle 8 entgegengesetzte Ende des Lichtleiters 9 ist mit einem Reflektor 14 versehen, oder es kann dort ebenfalls eine Lichtquelle angebracht werden. Der Lichtkegel der Lichtquelle 8 hat einen kleinen Öffnungswinkel von beispielsweise kleiner etwa 2 · 30°, da die von der Lichtquelle 8 erzeugten Lichtstrahlen 23 dann im Winkelbereich der Totalreflexion auf die Kunststofffolie 15 treffen. Der hohe Reflexionsgrad der Kunststofffolie 15 würde nun dafür sorgen, daß das eingekoppelte Licht 23 in dem Lichtleiter 9 ständig hin- und herreflektiert wird und lediglich ein geringer Bruchteil des Lichtes austritt. Die Kunststofffolie 15 ist jedoch für größere Eintrittswinkel transparent. Daher kann durch eine Winkeländerung des Lichtstrahles 23 im Lichtleiter 9 das Licht seitlich ausgekoppelt werden.

Zu diesem Zweck ist an der Innenseite der Kunststofffolie 15 konzentrisch zu dieser ein sogenannter Extraktor 16 vorgesehen, der sich in Umfangsrichtung allerdings nur über einen Teilbereich der Kunststofffolie 15 erstreckt. Der Extraktor 16 ist beispielsweise eine diffus weiß reflektierende Folie mit hohem Reflexionsgrad, die das Licht 23 diffus streut. Wie in Fig. 6B veranschaulicht tritt auf diese Weise ein Teil des Lichts 23 durch die Seitenfläche des Lichtleiters 9 aus und der andere Teil wird im Lichtleiter 9 weitergeleitet. Der Extraktor 16 nimmt mit zunehmender Länge des Lichtleiters 9 in der Breite zu, wie dies in Fig. 6A gezeigt ist, da am Ende des Lichtleiters 9 die in dem Lichtleiter transportierte Lichtmenge um den ausgekoppelten Anteil verringert ist. Für ein gleichmäßiges Lichtband muß also am Ende des Lichtleiters 9 prozentual mehr Licht ausgekoppelt werden als am Anfang des Lichtleiters 9. Dies wird durch einen größeren Anteil diffus gestreuten Lichts 23 aufgrund des breiter werdenden Extraktors 16 erreicht.

Die Verwendung des oben beschriebenen Lichtleiters 9 als Beleuchtungsmittel 6, 7 erlaubt auf besonders einfache Art und Weise eine Lichtfilterung. Wie oben beschrieben, können auf einfache Weise verschiedene Filter 13 in die Einkoppelvorrichtung 10 eingesetzt werden.

Ein weiterer Vorteil der Verwendung dieser Beleuchtungsmittel 6, 7 besteht darin, daß der Lichtleiter 9 als solcher keine Wärmequelle darstellt und die Lichtquelle 8 auf einfache Weise außerhalb des Kühlraumes 3, 5 angeordnet werden kann, wie dies beispielsweise im Fall der vertikal angeordneten Beleuchtungsmittel 7 in Fig. 1 dargestellt ist. Ebenso einfach kann die Lichtquelle 8 aber auch an einer Stelle im Inneren des Kühlraumes 3, 5 positioniert werden, an der die Wärmeeinstrahlung auf das Kühlgut leicht abgeschirmt werden kann. Auf diese Weise wird eine direkte Wärmeeinstrahlung auf das Kühlgut durch die Beleuchtungsmittel verhindert und die Kühllast nicht unnötig erhöht.

Zudem ist die Lichtleistung des Lichtleiters 9 im Gegensatz zu der der herkömmlich verwendeten Leuchtstofflampen nicht bzw. nur unwesentlich von der Umgebungstemperatur abhängig. Es können also bei der erfindungsgemäßen Beleuchtungsanordnung auch Lichtquellen geringerer Lichtleistung verwendet und trotzdem noch eine ausreichende Beleuchtung der Kühlräume erzielt werden. Auch das Anbringen von zusätzlichen Beleuchtungsmitteln außerhalb der Kühlräume kann somit entfallen, die bei herkömmlichen Beleuchtungsanordnungen von Tiefkühlvorrichtungen zu unerwünschten Reflexionen an den Glastüren und -deckeln führen.

## Patentansprüche

1. Beleuchtungsanordnung für Kühlvorrichtungen (1), insbesondere für Tiefkühltruhen und -schränke, mit wenigstens einem Kühlraum (3, 5) und wenigstens einer Lichtquelle (8) zur Beleuchtung des Kühlraumes (3, 5 ),
**dadurch gekennzeichnet**,
daß das Licht von der Lichtquelle (8) über einen an diese angekoppelten Lichtleiter (9) zu dem zu beleuchtenden Kühlgut geführt ist.

2. Beleuchtungsanordnung nach Anspruch 1,
**dadurch gekennzeichnet**,
daß die Lichtquelle (8) außerhalb des Kühlraumes (3, 5) der Kühlvorrichtung (1) angeordnet ist.

3. Beleuchtungsanordnung nach Anspruch 1 oder 2,
**dadurch gekennzeichnet**,
daß das Licht aus dem Lichtleiter (9) seitlich auskoppelbar ist.

4. Beleuchtungsanordnung nach einem der vorhergehenden Ansprüche,
**dadurch gekennzeichnet**,
daß der Lichtleiter (9) eine lichtdurchlässige Kunststofffolie (15) mit einer außenliegenden Prismenstruktur (19) zur Totalreflexion des Lichtes bei kleinen Einfallswinkeln und an der Innenseite der lichtdurchlässigen Kunststofffolie (15) ein Mittel (16) zur diffusen Streuung des Lichtes aufweist.

5. Beleuchtungsanordnung nach Anspruch 4,
**dadurch gekennzeichnet**,
daß die Breite des Mittels (16) zur diffusen Streuung des Lichtes mit zunehmender Länge des Lichtleiters (9) zunimmt.

6. Beleuchtungsanordnung nach Anspruch 4 oder 5,
**dadurch gekennzeichnet**,
daß der Lichtleiter (9) an der Außenseite der lichtdurchlässigen Kunststofffolie (15) ein lichtdurchlässiges Schutzrohr (17) aufweist.

7. Beleuchtungsanordnung nach einem der Ansprüche 4 bis 6
**dadurch gekennzeichnet**,
daß der Lichtleiter (9) an der Außenseite der lichtdurchlässigen Kunststofffolie (15) einen Reflektor (18) mit einem vorbestimmten Öffnungswinkel (α) aufweist.

8. Beleuchtungsanordnung nach einem der vorhergehenden Ansprüche,
**dadurch gekennzeichnet**,
daß der Lichtleiter (9) an seinem der Lichtquelle (8) entgegengesetzten Ende einen Reflektor (14) aufweist.

9. Beleuchtungsanordnung nach einem der vorhergehenden Ansprüche,
**dadurch gekennzeichnet**,
daß der Lichtkegel der Lichtquelle (8) einen Öffnungswinkel kleiner als etwa 2 · 30° hat.

10. Beleuchtungsanordnung nach einem der vorhergehenden Ansprüche,
**dadurch gekennzeichnet**,
daß die Lichtquelle (8) eine Halogen-Metalldampflampe ist.

11. Beleuchtungsanordnung nach einem der vorhergehenden Ansprüche,
**dadurch gekennzeichnet**,
daß das von der Lichtquelle (8) erzeugte Licht eine Farbtemperatur größer als etwa 4000 K hat.

12. Beleuchtungsanordnung nach einem der vorhergehenden Ansprüche,
**dadurch gekennzeichnet**,
daß zwischen der Lichtquelle (8) und dem Lichtleiter (9) ein UV- und/oder IR-Filter (13) angeordnet ist.

13. Verwendung eines mit einer Lichtquelle (8) gekoppelten Lichtleiters (9), der eine lichtdurchlässige Kunststofffolie (15) mit einer außenliegenden Prismenstruktur (19) aufweist, aus der Licht seitlich auskoppelbar ist, zur Beleuchtung von Kühlgut in Kühlvorrichtungen.
